# EUROPÄISCHE PATENTANMELDUNG

(11) **EP 2 930 003 A1**
(43) Veröffentlichungstag der Anmeldung: **14.10.2015**
(21) Anmeldenummer: 15001056.9
(22) Anmeldetag: 13.04.2015
(51) Int. Cl.: B29C 45/14, B29C 45/78, B29C 45/00, B29C 45/16, B29K 59/00

(54) **IM SPRITZGIESSVERFAHREN HERGESTELLTES KUNSTSTOFFFORMTEIL**

(30) Priorität: 13.04.2014 DE 102014005366; 13.04.2014 DE 202014003102 U
(71) Anmelder: Fuchs Kunststofftechnik GmbH, 51647 Gummersbach (DE)
(72) Erfinder: STÖTZEL, Henning, 51709 Marienheide (DE); BIETZ, Carsten, 51647 Gummersbach (DE); FUCHS, Timo, 51709 Marienheide (DE); ALTENFELD, Susanne, 58762 Altena (DE)
(74) Vertreter: Lüdcke, Joachim Moritz

(57) **Zusammenfassung**

Es wird ein im Mehrkomponenten-Spritzgießverfahren herstellbares Kunststoffformteil (1) vorgeschlagen umfassend eine Funktionsschicht (2) und eine Dekorschicht (3), wobei die Dekorschicht (3) eine von der Funktionsschicht (2) weg weisende Sichtseite (4) aufweist und die Sichtseite (4) frei von Beschichtungen ist, wobei die Oberfläche der Sichtseite (4) einen DOI-Wert von wenigstens 77 aufweist und einen du-Wert von weniger als 40, wobei wenigstens die Dekorschicht (3) aus einem teilkristallinen Kunststoff besteht, sowie ein Verfahren.

## Beschreibung

Die Erfindung betrifft ein Spritzgießverfahren hergestelltes Kunststoffformteil und ein Verfahren zu seiner Herstellung.

Im Spritzgießverfahren hergestellte Kunststoffformteile werden seit vielen Jahren in verschiedensten Anwendungsbereichen eingesetzt. Ein wesentlicher Vorteil von solchen Kunststoffspritzgussformteilen ist dabei, dass eine Massenproduktion zu geringen Kosten möglich ist. Für Spritzgießverfahren geeignete Werkstoffe stehen in einer großen Bandbreite zur Verfügung, so dass die normalen Anforderungen an eine Benutzung im täglichen Gebrauch erfüllt werden können. Jahrzehntelang blieb der Einsatz solcher Spritzgussformteile auf einfache und niedrigpreisige Produkte beschränkt, insbesondere wo die Kunststoffspritzgussformteile äußerlich sichtbar sind, beispielsweise als Abdeckung oder Gerätegehäuse.

Speziell bei höherwertigen Anwendungen, wie bei hochpreisigen Mobiltelefonen oder hochpreisigen Kraftfahrzeugen wurden "edler" aussehende Materialien für Gehäuse, Abdeckblenden und dergleichen verwendet, beispielsweise geprägtes Aluminium oder Abdeckelemente mit Holzfurnier oder aufwendigem Holzimitat. Im Hinblick auf Herstellungskosten und Gewicht wurden solche Produkte in vielen Bereichen inzwischen ebenfalls von Spritzgussformteilen verdrängt.

Ein wesentliches Kriterium für die Akzeptanz von Kunststoffspritzgussformteilen für höherwertige Anwendungen ist der Oberflächenglanz. Seit Jahrhunderten scheint starker Glanz einen besonderen Wert eines Gegenstandes zu vermitteln. Dies reicht von Gegenständen aus polierten Edelmetallen, wie Silbergeschirr, bis zum Klavierlack, einem Begriff, der selbst heutzutage noch für besonders hochwertige Oberflächengestaltung, zum Beispiel für Gehäuse bei teuren Notebooks, verwendet wird. Der Ruf des Klavierlacks stammt von schwarz gebeizten Flügeln, die bereits aufgrund des Verarbeitungs- und Materialaufwandes für das Musikinstrument selbst extrem teuer waren, und denen durch eine Vielzahl von Klarlackschichten mit Politur jeder Schicht ein besonders tiefer Glanz verliehen wurde.

Hochwertig aussehende Oberflächen bei Kunststoffspritzgussformteilen werden durch unterschiedliche Verfahren hergestellt, beispielsweise durch Hinterspritzen von Effektfolien, Beschichtung mittels Galvanik oder PVD-Verfahren (physical vapor deposition), oder durch Lackieren.

Besonders beliebt in den letzten Jahren waren zum Beispiel Formteile mit hochglänzendem Oberflächen in schwarz für Gehäuse hochwertiger Laptops oder für Verkleidungsteile im Fahrzeuginnenraum, die üblicherweise in Anlehnung an den Klavierlack als "Piano-Black" vermarktet werden. Grundsätzlich sind hochglänzende Oberflächen empfindlicher gegenüber Kratzern durch Gebrauch; Kratzer sind zudem bei dunklen Flächen leichter sichtbar als bei hellen. Dementsprechend wurde insbesondere für Interieurteile für Kraftfahrzeuge erheblicher Aufwand für die Entwicklung von Lacken und Lackiertechniken für Kunststoffformteile getrieben, die nicht nur den erwünschten hohen Glanz, sondern auch eine kratzfeste Oberfläche ergeben.

Aus der DE 36 36 606 A1 der Bayer AG ist bekannt, dass das direkte, haftvermittlerfreie Aufbringen von technisch interessierten Deck- und Klarlackauflagen auf Polyamidsubstrate erhebliche Probleme mit sich bringt, da die für andere Kunststoffe üblichen Vorbehandlungsmethoden, wie Waschen, Entfetten, Sandstrahlen, Schleifen, Abbürsten, Phosphatieren, Passivieren, Fluatieren, Flammen, Beizen und Ätzen ungeeignet sind. Demgegenüber sollen technische Polyamid-Kunststoffteile wie Radzierblenden, Türgriffe, Radnaben, Zierleisten oder Stoßstangen mit einer Haftvermittlerauflage grundiert werden. Als brauchbare Grundierungen seien beispielsweise mittelelastische 2-Komponenten(2 K)-Polyurethan-Grundierung geeignet. Diese an sich brauchbaren Methoden sollen allerdings den Nachteil haben, dass sie relativ viele Verfahrensschritte bzw. den Einsatz von zusätzlichen Chemikalien erfordern und darüber hinaus in vielen Fällen die guten optischen Eigenschaften wie Brillanz und Klarheit und Glanz des Decklackes negativ beeinflussen und die so angebrachten Lackauflagen in vielen Fällen den hohen Anforderungen der Temperaturwechselprüfung gemäß DIN 53 496 nicht genügen. Es wird daher vorgeschlagen, die Substrate zunächst in einer Lösung eines Gemisches von Halogeniden von Elementen der 1. und/oder 2. Hauptgruppe des Periodensystems und Salzen aus schwachen anorganischen Basen und starken anorganischen Säuren in einem nichtätzenden organischen Quell- oder Lösungsmittel für Polyamide, oder in einer Lösung der Chelatkomplexe der Salze von mit Schiffschen Basen, komplexbildenden Aminen, Carbonsäuren, Diketonen, α,β-ungesättigten Ketonen, Phosphinen, in einem nichtätzenden, organischen Quell- oder Lösungsmittel für Polyamide, vorzugsweise in einem technischen Alkohol, vorzubehandeln.

Eine besondere Herausforderung stellt die Erzeugung von Metallic-Oberflächen dar. Neben der Farbe beeinflussen auch Metallicflakes oder andere Glitterpigmente den visuellen Eindruck eines Bauteils. Der Glitzereffekt ändert sich mit den Lichtverhältnissen. Ein Glitzereffekt ist im Wesentlichen nur unter direkter Einstrahlung (Sonneneinstrahlung) wahrnehmbar. Der Glitzereffekt wird durch das Reflexionsvermögen der einzelnen Effektpigmente verursacht. Aus diesem Grunde wird er beeinflusst durch Art und Größe der Metallicflakes, Konzentration der Effektpigmente, die Ausrichtung der Effektpigmente und die Applikationsmethode. Bei diffuser Beleuchtung verschwindet der Glitzereffekt und es entsteht ein matt-körniger Eindruck. Die Körnigkeit hängt von der Flakegröße und der Flake-Orientierung ab. Daraus resultiert ein uneinheitliches und unregelmäßiges Muster. Der Beobachtungswinkel ist dabei von geringer Bedeutung.

Um wenigstens einen Oberflächenglanz zu erhalten, werden daher solche Metallic-Oberflächen mit einem Klarlack überzogen, auch als Clear-Coat bezeichnet. In der WO 2010/105731 A2 wird zum Erzielen von starken Glanz- oder Glitzeffekten auch bei einer nur zweischichtigen Lackierung von Fahrzeugen und Fahrzeugteilen vorgeschlagen, einen Automobil-Klarlack mit transparenten Effektpigmenten zu versehen. Es ist aus dem Stand der Technik auch bekannt, mit Metallic-Pigmenten durchgefärbte Kunststoffspritzgussteile herzustellen, allerdings nehmen diese ein allenfalls seidenmattes Aussehen an.

In der DE 10 2005 004 280 A1 der Evonik AG sind beispielsweise flächige Verbunde beschrieben, bei denen eine Folie oder ein sonstiges Halbzeug aus einem höheren Polyamid, z. B. PA12, mit Plasma behandelt und mit einem weiteren Material, z. B. PA6 oder PA66 hinterspritzt wird, z.B. bei Motorraumabdeckungen. Weitere Anwendungsbereiche sind Folien (Ein- oder Mehrschichtfolien), die spezielle Oberflächenanforderungen erfüllen müssen. Hier werden u.a. Dekorfolien mit speziellen Anforderungen an Farbe, Glanz, Kratzfestigkeit oder Oberflächeneffekte für die Verwendung als Abdeckung, Beplankung oder Gehäuseteil im Automobilinnenraum oder als Außenteil genannt. Es wird beschrieben, dass generell im Falle des Hinterformens eingelegter Folien diese ggf. vorher mit entsprechenden Umformverfahren, wie Thermo- oder High-Pressure-Formen, vorgeformt werden. Auch die beschreibt DE 601 11 839 T2 die Herstellung von Formteilen durch Hinterspritzen von mehrlagigen durch Vorhanggießen hergestellten Flächengebilden.

In der DE 10 2011 108 219 A1 der Daimler AG wird vorgeschlagen, Teile aus Faserverbundkunststoffen im 2K-Verfahren zu umspritzen unter Verwendung einer variothermen Temperierung des Spritzgießwerkzeuges. Eine solche variable Temperierung eines Spritzgießwerkzeuges ist aus der EP 1 212 184 B1 der Wittmann Kunststoffgeräte GmbH bekannt. Dabei wird die Temperatur des Spritzgießwerkzeugs in Abhängigkeit von dem Prozesszyklus gesteuert. Dies wird als besonders kritisch beschrieben bei der Herstellung von Rohlingen für optische Datenträger (CDs), bei denen einerseits höchste optische Qualität bei der Verarbeitung des Polycarbonat-Materials erreicht werden muss, deren Herstellung jedoch nur in großen Mengen und mit hohen Taktraten wirtschaftlich ist. Durch die vorgeschlagenen Anordnung der Steuerorgane für das Temperiermedium soll Leitungswasser effektiv und kostengünstig eingesetzt und damit die Wirtschaftlichkeit des Herstellprozesses verbessert werden können.

Aus der DE 20 2009 005 219 U1 der Kunststoff-Institut für mittelständische Wirtschaft NRW GmbH ist ein temperierbares Formwerkzeug, vorzugsweise aus Metall, mit einer formgebenden Kontaktfläche und mit zumindest einer in das Werkzeug integrierten Temperierkavität bekannt. Vorbekannte Formwerkzeuge verfügen über Temperierkanäle, durch die zum Halten des Formwerkzeuges auf einer bestimmten Temperatur, zum Erwärmen oder zum Kühlen desselben auf eine bestimmte Temperatur entsprechend temperierte Fluide, beispielsweise Wasser oder Öl, hindurchgeleitet werden. Wenn derartige Formwerkzeuge in bestimmten Bereichen eine von der Grundtemperatur abweichende, höhere Temperatur aufweisen sollen, werden zusätzlich elektrische Heizpatronen oder, im Falle einer lokalen Temperaturerniedrigung, elektrische Kühlelemente in Ausnehmungen des Formwerkzeuges angeordnet. Ebenfalls sind Formwerkzeuge bekannt, bei denen die Kühlelemente für ein definiertes Abkühlen der Kunststoffschmelze sorgen und damit den Abkühlprozess, mithin die Zykluszeit verkürzen. Zur Verbesserung der Anwendbarkeit solcher Werkzeuge und Verfahren wird vorgeschlagen, in dem Formwerkzeug innerhalb der zumindest einen Temperierkavität ein hohlraumaufweisendes Stützgerüst anzuordnen. Das Stützgerüst soll ist in die Kavität nach Ausbilden derselben eingebracht bzw. eingesetzt werden. Das Stützgerüst dient zur Abstützung einer die Temperierkavität von einer die formgebende Kontaktfläche bildenden Wand gegenüber einem Widerlager, welches wiederum Teil des Formwerkzeuges ist. Druckbelastungen, die auf die Kontaktfläche einwirken, werden über das Stützgerüst in das Widerlager eingeleitet, ohne dass sich die Kontaktfläche verformt. Entsprechend formstabil ist in Bezug auf die zu erwartenden Drücke das Stützgerüst. Die Temperierkavität wird somit einerseits durch die Rückwand der die formgebenden Kontaktfläche bildenden Wand des Formwerkzeuges und andererseits durch ein davon beabstandetes Widerlager begrenzt. Das Stützgerüst selbst füllt die Temperierkavität zumindest so weit aus, dass dem vorgenannten Abstützzweck Genüge getan ist. Das die Temperierkavität füllende Stützgerüst soll aus einem schüttfähigen Material gebildet sein, insbesondere Aluminiumschaumkugeln. Ähnliches ist auch in der WO 2011/026162 A1 der Wittmann Kunststoffgeräte GmbH beschrieben.

Gemäß der Firmen-Veröffentlichung "Variotherm technology BFMOLD®", Artikelnummer 30062956, 2013/09, der Fa. Wittmann Battenfeld GmbH & Co. KG, Meinerzhagen, DE, eignen sich solche Werkzeuge mit Kugelfüllung zwar für die Herstellung hoch glänzender Kunststoffteile, jedoch soll das Verfahren nur für die Herstellung flacher Teile mit Geometrien bis 2,5 D geeignet sein, also im Wesentlichen plattenförmiger Teile.

Aus der EP 2 199 058 A1 und der DE 10 2008 062 433 B3 der Werkzeugbau Siegfried Hofmann GmbH, Lichtenfels, DE ist ein Verfahren zur zyklusabhängigen Temperierung eines Spritzgieß- oder Thermoformwerkzeuges bekannt, bei dem das Werkzeug innerhalb erster Zyklenabschnitte gezielt aufgeheizt und innerhalb zweiter Zyklenabschnitte gezielt gekühlt wird, wozu in dem Werkzeug angeordnete Heiz-/Kühlkanäle von wenigstens einem die Form aufheizenden oder abkühlenden Medium durchströmt werden und eine mit Nassdampf beheizte und gekühlte Spritzgussform. Durch das beschriebene Verfahren soll die Aufheizung und Abkühlung des Werkzeugs wesentlich beschleunigt werden und damit die Zykluszeit des beschriebenen Verfahrens auf nur noch 2/3 der Zykluszeit des bekannten Verfahrens gesenkt werden können.

Ein Verfahren zur Herstellung eines vorderseitig metallisierten Kunststoff-Bedienelements zur Verwendung in Kraftfahrzeugen ist in der DE 10 2010 016 973 A1 beschrieben. Dazu soll zunächst ein Kunststoff-Grundkörper erzeugt werden mit einem rückseitig angeordneten Teilkörper aus einem nicht galvanisierbaren Kunststoff A und einer vorderseitig angeordneten galvanisierbaren Schicht aus einem galvanisierbaren Kunststoff B. Nachfolgend erfolgt ein chemisches oder physikalisches Abscheiden einer elektrisch leitfähigen ersten Metallschicht auf der galvanisierbaren Schicht des Kunststoff-Grundkörpers. Zur Fertigstellung des metallisierten Bedienelements wird nachfolgend die Dicke der ersten Metallschicht, die ggf. noch mit einer dünnen Schicht aus Vorkupfer oder Vornickel bedeckt ist, mittels eines galvanischen, d. h. elektrochemischen, Verfahrens erhöht. In der Regel wird hierzu auf die erste Metallschicht eine erste Zwischenschicht aus Kupfer abgeschieden, die aufgrund ihrer hohen Duktilität eine Brücke bildet zwischen dem Kunststoff-Grundkörper, der eine hohe Elastizität aufweist, und einer in einem nachfolgenden Prozessschritt auf der Oberfläche des Bedienelements abgeschiedenen Dekorschicht aus einem harten Dekormetall wie Chrom oder auch Nickel. Dazu soll der Grundkörper mittels geeigneter Spritzgießverfahren aus zwei verschiedenen Kunststoffkomponenten hergestellt werden. Dabei wird eine solche Abfolge bei der Herstellung der beiden Komponenten des Grundkörpers vorgeschlagen, bei der zuerst diejenige Kunststoffkomponente gespritzt wird, deren Kunststoffmaterial bei höherer Temperatur verarbeitet werden muss, also i. A. den höheren Schmelzpunkt aufweist, und in einem nachfolgenden Verfahrensschritt die bei einer niedrigeren Temperatur zu verarbeitende zweite Kunststoffkomponente an die vorzugsweise bereits vollständig erstarrte erste Kunststoffkomponente angespritzt wird.

Die bekannten Verfahren bei der Herstellung von Kunststoffformteilen mit hochwertig aussehende Oberflächen haben einen hohen Entwicklungsstand erreicht und solche Kunststoffformteile werden vielfältig eingesetzt. Besonders durch das Lackieren lassen sich die Gebrauchseigenschaften solcher Teile beeinflussen, z.B. hinsichtlich der Kratzbeständigkeit. Der Erfindung liegt daher die Aufgabe zugrunde, alternative Kunststoffspritzgussformteile mit hochwertig aussehenden Oberflächen bereitzustellen.

Die Aufgabe wird erfindungsgemäß gelöst durch ein im Mehrkomponenten-Spritzgießverfahren herstellbares Kunststoffformteil umfassend zumindest eine Funktionsschicht und eine Dekorschicht, wobei die Dekorschicht eine von der Funktionsschicht weg weisende Sichtseite aufweist und die Sichtseite frei von Beschichtungen ist, wobei die Oberfläche der Sichtseite einen DOI-Wert von wenigstens 77 aufweist und einen du-Wert von weniger als 40, und wobei wenigstens die Dekorschicht aus einem teilkristallinen Kunststoff besteht.

Vorzugsweise beträgt der DOI-Wert wenigstens 80, weiter bevorzugt wenigstens 85, insbesondere 90 bis 96. In einer weiter besonders zweckmäßigen Ausführungsform der Erfindung beträgt der du-Wert der Oberfläche der Sichtseite weniger als 35, insbesondere zwischen 10 und 30.

Mit DOI (Distinctness of Image) wird die Abbildungsqualität einer Oberfläche bei naher Betrachtung bezeichnet. Dieser Parameter hat sich als nicht genormter Standard in der Automobilindustrie zur messtechnischen Bewertung der Oberflächenqualität insbesondere hochglänzender Oberflächen etabliert und stellt eine Simulation des visuellen Eindrucks dar. Die angegebenen DOI-Werte beziehen sich auf eine Messung mit einem Messgerät "micro-wave-scan" der Fa. BYK-Gardner GmbH, Geretsried, DE, Produktnummer 4824, in der Betriebsart "DOI (Dorigon)", oder vergleichbare. Die Messgeräte der wave-scan-Baureihe werden in der Automobilindustrie standardmäßig eingesetzt und werden durch Referenzmuster nach Urmuster kalibriert. Die Messung nach DOI (Dorigon) korreliert zur Glanzmessung nach ASTM E 430, der Wertebereich ist ähnlich zur 20° Glanzmessung. DOI kann umgangssprachlich als Brillanz oder Bildschärfe einer glänzenden Oberfläche bezeichnet werden.

Mit du (Dullness) wird die Feinmattigkeit einer Oberfläche charakterisiert. Diese wird bestimmt durch das Streulicht, dass von Feinstrukturen mit Wellenlängen von unter 0,1 mm verursacht wird. Die angegebenen DOI-Werte beziehen sich ebenfalls auf eine Messung mit einem Messgerät "micro-wave-scan" der Fa. BYK-Gardner GmbH, Geretsried, DE, Produktnummer 4824, in der Betriebsart "du", oder vergleichbare. Niedrige Dullness wird visuell als besonders tiefer Glanz empfunden.

Durch den Aufbau des erfindungsgemäßen Kunststoffformteils ist es möglich, ein Kunststoffformteil mit hochwertiger Oberfläche bei dreidimensionaler Struktur, z.B. bei Krümmungen und Wölbungen sowie für Abstands- und Befestigungselemente, kostengünstig bereitzustellen. Durch den Einsatz erfindungsgemäßer Kunststoffformteile kann die Umweltbelastung, die sonst bei der Herstellung von Kunststoffspritzgussformteilen mit hochwertig aussehenden Oberflächen anfällt, wesentlich reduziert werden.

Gegenüber lackierten Kunststoffformteilen kann nicht nur die umweltbelastende Aufbereitung der Teile vor dem Lackieren mit verschiedensten Verfahren und Einsatz von Chemikalien vermieden werden, sondern es werden auch sehr große Mengen an Kunststoffabfall durch Ausschussteile eingespart. Neben dem zusätzlichen Verarbeitungsschritt durch das Lackieren spielt in der praktischen Anwendung der große Ausschuss im Bereich von 60 bis 80 % bei dem Erstellen von Hochglanzoberflächen mittels Lack auf Kunststoffspritzguss-Formteilen eine erhebliche Rolle, auch, da die lackierten Kunststoffformteile nicht als Rezyklat dem Herstellungsprozess wieder zugeführt werden können.

Durch den Entfall zusätzlicher Beschichtungen, Folien, Metallisierungen und dergleichen wird das Recycling der Kunststoffformteile nach Ablauf der Gebrauchsdauer vereinfacht, da keine aufwendige Materialtrennung erforderlich ist. Im Vergleich zu lackierten Kunststoffformteilen ist ein Stoffrecycling überhaupt erst möglich.

Vorzugsweise besteht die Dekorschicht aus einem mit Metallic-Pigmenten gefüllten Kunststoff. Durch die glänzende Metallicoberfläche lassen sich erweiterte Gestaltungsmöglichkeiten, z.B. in Innenräumen von Kraftfahrzeugen, erhalten. Die Eigenschaften lassen sich optimal ausnutzen, wenn die Dekorschicht die Funktionsschicht nur auf einem Teil der Oberfläche der Funktionsschicht überdeckt. Dadurch kann Materialwahl und Farbgestaltung von Funktionselementen, wie Stegen, Säulen, Aufnahmen für Schrauben, Schnappelemente etc. unabhängig von der Dekorschicht optimiert werden und das Kunststoffformteil lässt sich im Mehrkomponenten-Verfahren, z.B. im 2K-Verfahren, einfacher spritzgießen durch Drehen des Werkzeugs.

Für beste Oberflächenqualität ist es vorteilhaft, wenn die Dicke der Dekorschicht im Wesentlichen gleichmäßig ist, vorzugsweise die Dicke der Dekorschicht an jeder Stelle wenigstens das 0,7-fache der größten Dicke der Dekorschicht beträgt.

Für hohe Maßhaltigkeit ist es vorteilhaft, wenn die Dekorschicht und die Funktionsschicht aus dem gleichen Grundmaterial bestehen. Eine kostengünstige Fertigung ist möglich, wenn die Dekorschicht und die Funktionsschicht unterschiedlich pigmentiert sind. Dadurch lässt sich z.B. die Dekorschicht in aufwendiger Metallicausführung herstellen, während eine schwarz eingefärbte Funktionsschicht ein Durchscheinen von hinten unterbindet und eventuelle Sichtkanten wie eine Schattenfuge wirken. Durch die Dicke der Dekorschicht ist die Haltbarkeit gegen sichtbare Veränderungen durch Durchscheinen des Grundmaterials, hier der Funktionsschicht, gegenüber einer Lackierung erheblich besser, da auch bei leichten Abschaben nicht gleich andersfarbige Stellen entstehen. Daher lässt sich die Wertigkeit, z.B. eines Automobils oder auch eines Laptops, über einen längeren Gebrauchszeitraum erhalten und somit der Wiederverkaufswert für eine Zweitnutzung erhöhen.

Die Aufgabe wird erfindungsgemäß auch gelöst durch ein Verfahren zur Herstellung eines solchen Kunststoffformteils, bei dem das Kunststoffformteil zumindest eine Funktionsschicht und eine Dekorschicht erhält, wobei die Dekorschicht eine von der Funktionsschicht weg weisende Sichtseite aufweist, wobei Funktionsschicht und Dekorschicht im Mehrkomponenten-Spritzgießverfahren verarbeitet werden, wobei zunächst das Material der zumindest einen Funktionsschicht in eine Formkavität eingespritzt wird, dadurch gekennzeichnet, dass die Temperatur der der Sichtseite des Werkstücks zugewandten Wandung der Kavität der Spritzgießform bereits zu Beginn des Einspritzvorgangs für die Dekorschicht höher ist, als die Glasübergangstemperatur des für die Dekorschicht verarbeiteten Kunststoffes, vorzugsweise wird die der Sichtseite des Werkstücks zugewandte Wandung der Kavität der Spritzgießform während der Dauer des Einspritzvorganges der Dekorschicht auf einer Temperatur oberhalb der Glasübergangstemperatur des verarbeiteten Kunststoffes gehalten. Besonders bevorzugt ist das Material der Dekorschicht ein teilkristalliner thermoplastischer Kunststoff und die Glasübergangstemperatur ist ersetzt durch eine Vergleichstemperatur, die der um 15K verringerten Erweichungstemperatur entspricht.

Durch die Abstimmung von Aufbau des Kunststoffformteils und Optimierung der Verfahrensparameter im Spritzgießprozess lassen sich die wirtschaftlichen Vorteile der Erfindung gegenüber herkömmlichen Kunststoffformteilen mit hochwertigen Oberflächen bestens erreichen. Überraschender Weise ergibt sich bei dem erfindungsgemäßen Kunststoffformteil im Vergleich zu herkömmlich metallic-lackierten Kunststoffformteilen eine gleichmäßigere Pigmentverteilung auf der Sichtseite der Dekorschicht.

In einer besonders bevorzugten Ausführungsform der Erfindung ist die Dekorschicht aus einem modifizierten oder nichtmodifizierten POM hergestellt. POM (Polyoxymethylen) ist ein Polyacetal und gehört zu den teilkristallinen thermoplastischen Werkstoffen und gilt als schwierig im Spritzgießprozess zu verarbeiten. Durch die erfindungsgemäße Ausgestaltung von Kunststoffformteil und Verfahren lassen sich jedoch überraschender Weise maßgenaue Teile mit hochwertigen Hochglanzoberflächen bereitstellen. Dadurch können die mechanischen Eigenschaften von POM, insbesondere im Crashverhalten, auch für hochwertige Hochglanzoberflächen genutzt werden. Durch die Verwendung von POM kann auch ohne aufwendige Lackierung des Kunststoffformteils die Anforderungen seitens der Automobilhersteller bezüglich Kratzfestigkeit, das heißt, einer Glanzgradänderung durch Kratzer, erreicht werden. Diese Anforderungen konnten bisher mit Hochglanzoberflächen nur durch eine entsprechend optimierte Lackierung erfüllt werden. Auch ein besseres Glitzerverhalten wurde überraschende Weise beobachtet, wobei möglicherweise eine andere Orientierung der Metallicpigmente infolge der Kombination aus der erfindungsgemäßen Ausgestaltung von Kunststoffformteil und Verfahren im Vergleich zum Lackauftrag erfolgt und dadurch einen anderen visuellen Effekt erzielt.

Die Erfindung soll im Folgenden anhand eines in den beigefügten Zeichnungen dargestellten Ausführungsbeispiels näher erläutert werden. Es zeigen:
- Figur 1: ein erfindungsgemäßes Kunststoffformteil in Form einer Zierblende mit Blick auf die Unterseite der Funktionsschicht;
- Figur 2: eine Ansicht auf die Sichtseite der Dekorschicht des Kunststoffformteils aus Figur 1;
- Figur 3: eine Schnittdarstellung durch das erfindungsgemäße Kunststoffformteil;
- Figur 4: eine Mikroskopaufnahme der Pigmentverteilung in der Lackschicht eines herkömmlich lackierten Kunststoffformteils nach dem Stand der Technik; und
- Figur 5: eine Mikroskopaufnahme der Pigmentverteilung auf der Sichtseite der Dekorschicht eines erfindungsgemäßen Kunststoffformteils.

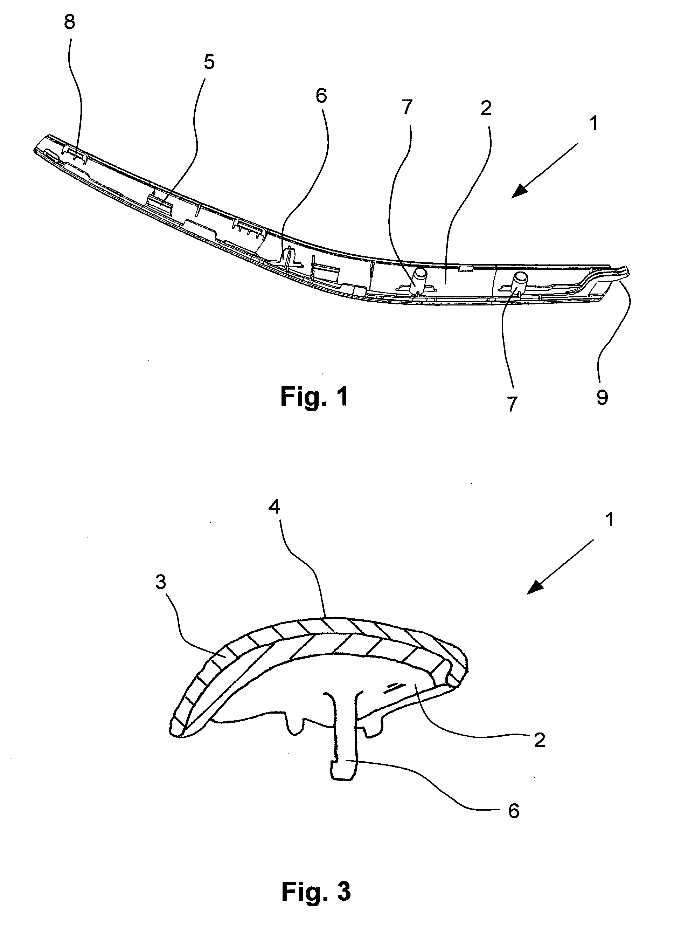

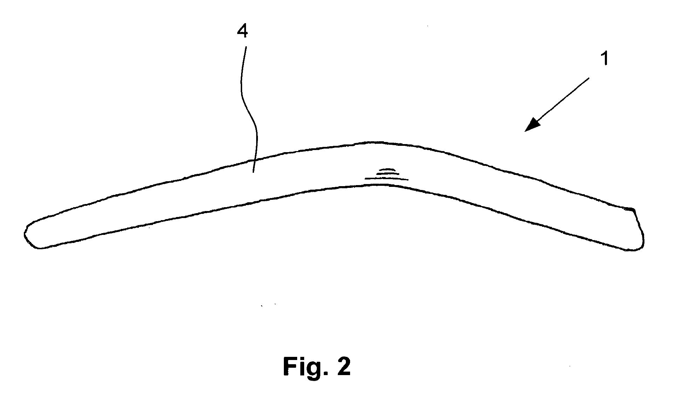

Figuren 1 und 2 zeigen ein erfindungsgemäßes Kunststoffformteil in Form einer Zierblende zur Verwendung in der Türinnenverkleidung eines Fahrzeugs. Das Kunststoffformteil ist insgesamt mit 1 bezeichnet. Das Kunststoffformteil 1 umfasst eine Funktionsschicht 2 und eine Dekorschicht 3, wobei die Dekorschicht 3 eine von der Funktionsschicht 2 weg weisende Sichtseite 4 aufweist. In Figur 1 ist die Sicht auf die Unterseite der Funktionsschicht 2 gezeigt. Wie zu erkennen ist, sind in der Funktionsschicht 2 verschiedene Funktionselemente realisiert, z.B. Stege 5, Säulen 6, Aufnahmen für Schrauben 7, Schnappelemente 8 und Haken 9. Figur 2 zeigt die Ansicht auf die Sichtseite 4 der Dekorschicht 3 so, wie das Kunststoffformteil 1 nach Einbau in ein Fahrzeug vom Benutzer wahrgenommen wird.

Auch wenn in dem beschriebenen Ausführungsbeispiel nur eine Funktionsschicht 2 erwähnt wird, kann ein erfindungsgemäßes Kunststoffformteil 1 auch mehrere Funktionsschichten 2 umfassen, z.B. bei Formteilen 1 mit komplexeren Einspreizbefestigungselementen, oder wenn Bereiche des Formtteils1 zusätzliche Befestigungs- oder Haltefunktionen übernehmen sollen.

In Figur 3 ist ein Schnitt durch das erfindungsgemäße Kunststoffformteil 1 dargestellt. Hier sind gut die Funktionsschicht 2 und die Dekorschicht 3 zu erkennen. Speziell ist hier zu erkennen, dass die Dekorschicht 3 die Funktionsschicht 2 nur auf einem Teil ihrer Oberfläche überdeckt. Weiter ist gut zu erkennen, dass die Dekorschicht 3 eine nahezu gleichmäßige Dicke in allen Bereichen aufweist, nur mit Ausnahme des unmittelbaren Randbereiches, wo dies aus technischen Gründen unvermeidlich ist. Die Dicke der Dekorschicht 3 an jeder Stelle beträgt wenigstens das 0,7-fache der größten Dicke der Dekorschicht 3, vorzugsweise wenigstens das 0,8-fache oder wenigstens das 0,9-fache. Durch diesen Aufbau lässt sich das Kunststoffformteil 1 in einem Mehrkomponenten-Spritzgießverfahren, hier im 2-Komponenten(2K)-Verfahren, einfacher spritzgießen durch Drehen des Werkzeugs, wobei zunächst die Funktionsschicht 2 gespritzt wird und nachfolgend die Dekorschicht 3.

Die Funktionsschicht 2 ist vorteilhaft aus einem schwarz eingefärbtem POM (modifiziert oder unmodifiziert) hergestellt, sie kann auch durch andere geeignete thermoplastische Materialien ersetzt werden, z.B. Blends auf Basis von Polycarbonat (PC) und AcrylnitrilButadien-Styrol (ABS). Teilkristalline thermoplastische Materialien umfassen z.B. verschiedene PA-Typen (Polyamide).

POM bietet erhebliche Vorzüge bezüglich seines mechanischen Verhaltens z. B. bei einem Unfall. Die Dekorschicht 3 ist vorteilhaft aus einem mit Metallic-Pigmenten (Metallicflakes) versehenen POM hergestellt, kann aber auch aus einem geeigneten anderen teilkristallinen thermoplastischen Material bestehen. Durch Verwendung des gleichen Grundmaterials können Probleme durch unterschiedliches Schwinden oder unterschiedliches Abkühlverhalten, wie sie bei Mehrkomponenten-Bauteilen aus unterschiedlichen Grundwerkstoffen auftreten können, vermieden werden.

POM (Polyoxymethylen) ist ein Polyacetal und gehört zu den teilkristallinen thermoplastischen Werkstoffen und gilt als schwierig im Spritzgießprozess zu verarbeiten. Durch die erfindungsgemäße Ausgestaltung von Kunststoffformteil und Verfahren lassen sich jedoch überraschender Weise maßgenaue Teile mit hochwertigen Hochglanzoberflächen bereitstellen. Zwar lassen sich amorphe Werkstoffe, wie z.B. Polycarbonat (PC) oder das unter der Marke Plexiglas® bekannte Polymethylmethacrylat (PMMA) bereits mit Hochglanzoberflächen im Spritzgießen einsetzen und kommen für Kunststoffoptiken und Verscheibungen, auch Automobilbereich zum Einsatz, z.B. als Linsen und Abdeckscheiben für LED-Scheinwerfer. Allerdings sind diese Materialien verhältnismäßig teuer und sind meist nicht gut für die komplexen Gestaltung von Interieurteilen geeignet.

Das erfindungsgemäße Kunststoffformteil 1 ist auf der Sichtseite 4 der Dekorschicht 3 frei von Beschichtungen, wie Lacken. Dadurch entfällt im Vergleich zum herkömmlichen Lackieren nicht nur der zusätzliche Verarbeitungsschritt durch das Lackieren selbst, sondern der in der praktischen Anwendung große Ausschuss im Bereich von 60 bis 80 % bei dem Erstellen von Hochglanzoberflächen mittels Lack auf Kunststoffspritzguss-Formteilen führt zu einem erheblichen wirtschaftlichen Vorteil des erfindungsgemäßen Kunststoffformteils 1 und Verfahren. Hinzu kommt eine erheblich bessere Umweltbilanz, da bereits der enorme Abfall durch Ausschuss beim Lackieren entfällt, auch, da die lackierten Kunststoffformteile nicht ohne weiteres als Rezyklat dem Herstellungsprozess wieder zugeführt werden können. Weiter entfällt der erhebliche Einsatz von Chemikalien im Rahmen der Vorbehandlung der Oberflächen vor dem Lackieren. Schließlich wird das Recycling der Kunststoffformteile 1 nach Gebrauch vereinfacht, da sortenreiner Kunststoff nach der Demontage zur Verfügung steht.

Die nicht beschichtete oder lackierte Sichtseite 4 eines erfindungsgemäßen Kunststoffformteils 1 weist auf ihrer Oberfläche einen DOI-Wert von wenigstens 77 und einen du-Wert von weniger als 40 auf. Der DOI-Wert der Sichtseite 4 eines erfindungsgemäßen Kunststoffformteils 1 kann auch Werte von 78, 79, vorteilhaft 80, 81, 82, 83, 84, weiter bevorzugt 85, 86, 87, 88, 89 annehmen, besonders bevorzugt 90, 91, 92, 93, 94, 95 oder 96. Der du-Wert der Sichtseite 4 eines erfindungsgemäßen Kunststoffformteils 1 kann auch Werte von 39, 38, 37, 36, bevorzugt 35, 34, 33, 32, 31, besonders bevorzugt 30, 29, 28, 27, 26, 25, 24, 23, 22, 21, 20, 19, 18, 17, 16, 15, 14, 13, 12, 11 oder 10 annehmen.

Bei mehreren Messungen ergaben sich bereits bei ersten Versuchstücken DOI-Werte von ca. 87 und du-Werte von ca. 21 und damit hervorragende Oberflächeneigenschaften, wie sie sonst nur bei aufwendiger Lackierung bekannt sind. Diese Messungen wurden mit einem Messgerät "micro-wave-scan" der Fa. BYK-Gardner GmbH, Geretsried, DE, Produktnummer 4824, in der Betriebsart "DOI (Dorigon)" bzw. "du" durchgeführt.

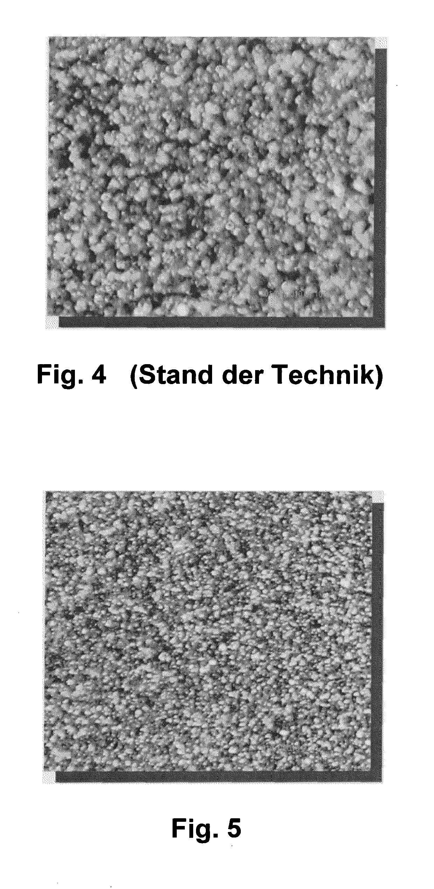

Ein mikroskopischer Vergleich eines nach dem Stand der Technik mit einer Lackierung beschichteten Kunststoffformteils (in Figur 4 abgebildet) mit einem erfindungsgemäßen Kunststoffformteil 1 (in Figur 5 abgebildet) zeigt überraschender Weise eine gleichmäßigere Verteilung der Metallic-Pigmente und bestätigt auch unter dem Gesichtspunkt der Farbqualität die mindestens Gleichwertigkeit der Oberfläche eines erfindungsgemäßen Kunststoffformteils 1 mit dem Stand der Technik.

Bei dem Verfahren zur Herstellung eines erfindungsgemäßen Kunststoffformteils 1 wird zunächst das Material der zumindest einen Funktionsschicht 2, ggfs. in nachfolgenden Schritten eine odere mehrere weitere Funktionsschichten, in eine Formkavität eingespritzt, wobei beim abschließenden Spritzen der Dekorschicht 3 die Temperatur der der Sichtseite 4 des Kunststoffformteils 1 zugewandten Wandung der Kavität der Spritzgießform bereits zu Beginn des Einspritzvorgangs für die Dekorschicht 3 höher ist, als die Glasübergangstemperatur des für die Dekorschicht 3 verarbeiteten Kunststoffes, wobei zweckmäßig die der Sichtseite 4 des Werkstücks zugewandte Wandung der Kavität der Spritzgießform während der Dauer des Einspritzvorganges der Dekorschicht 3 auf einer Temperatur oberhalb der Glasübergangstemperatur des verarbeiteten Kunststoffes gehalten wird. Wenn das Material der Dekorschicht 3 ein teilkristalliner thermoplastischer Kunststoff ist, wie besonders bevorzugt ein modifiziertes oder nichtmodifiziertes POM, wird die Glasübergangstemperatur ersetzt durch eine Vergleichstemperatur, die der um 15K verringerten Erweichungstemperatur des Materials entspricht.

## Patentansprüche

1. Im Mehrkomponenten-Spritzgießverfahren herstellbares Kunststoffformteil (1) umfassend zumindest eine Funktionsschicht (2) und eine Dekorschicht (3), wobei die Dekorschicht (3) eine von der zumindest einen Funktionsschicht (2) weg weisende Sichtseite (4) aufweist und die Sichtseite (4) frei von Beschichtungen ist, wobei die Oberfläche der Sichtseite (4) einen DOI-Wert von wenigstens 77 aufweist und einen du-Wert von weniger als 40, und wobei wenigstens die Dekorschicht (3) aus einem teilkristallinen Kunststoff besteht.

2. Kunststoffformteil (1) nach Anspruch 1, **dadurch gekennzeichnet, dass** der DOI-Wert wenigstens 80, bevorzugt wenigstens 85, beträgt.

3. Kunststoffformteil (1) nach Anspruch 2, **dadurch gekennzeichnet, dass** der DOI-Wert 90 bis 96 beträgt.

4. Kunststoffformteil (1) nach einem der vorhergehenden Ansprüche, **dadurch gekennzeichnet, dass** der du-Wert der Oberfläche der Sichtseite (4) weniger als 35 beträgt.

5. Kunststoffformteil (1) nach Anspruch 2, **dadurch gekennzeichnet, dass** der du-Wert der Oberfläche der Sichtseite (4) zwischen 10 und 30 beträgt.

6. Kunststoffformteil (1) nach einem der vorhergehenden Ansprüche, **dadurch gekennzeichnet, dass** die Dekorschicht (3) aus einem mit Metallic-Pigmenten gefüllten Kunststoff besteht.

7. Kunststoffformteil (1) nach einem der vorhergehenden Ansprüche, **dadurch gekennzeichnet, dass** die Dekorschicht (3) die Funktionsschicht (2) nur auf einem Teil der Oberfläche der Funktionsschicht (2) überdeckt.

8. Kunststoffformteil (1) nach einem der vorhergehenden Ansprüche, **dadurch gekennzeichnet, dass** die Dicke der Dekorschicht (3) im Wesentlichen gleichmäßig ist, vorzugsweise die Dicke der Dekorschicht (3) an jeder Stelle wenigstens das 0,7-fache der größten Dicke der Dekorschicht (3) beträgt.

9. Kunststoffformteil (1) nach einem der vorhergehenden Ansprüche, **dadurch gekennzeichnet, dass** die Dekorschicht (3) und die Funktionsschicht (2) aus dem gleichen Grundmaterial bestehen.

10. Kunststoffformteil I (1) nach Anspruch 9, **dadurch gekennzeichnet, dass** die Dekorschicht (3) und die Funktionsschicht (2) unterschiedlich pigmentiert sind.

11. Kunststoffformteil (1) nach einem der vorhergehenden Ansprüche, **dadurch gekennzeichnet, dass** die Dekorschicht (3) aus einem modifizierten oder nichtmodifizierten POM hergestellt ist.

12. Verfahren zur Herstellung eines Kunststoffformteils (1) nach einem der vorhergehenden Ansprüche, bei dem das Kunststoffformteil (1) zumindest eine Funktionsschicht (2) und eine Dekorschicht (3) erhält, wobei die Dekorschicht (3) eine von der zumindest einen Funktionsschicht (2) weg weisende Sichtseite (4) aufweist, wobei Funktionsschicht (2) und Dekorschicht (3) im Mehrkomponenten-Spritzgießverfahren verarbeitet werden, wobei zunächst das Material der zumindest einen Funktionsschicht (2) in eine Formkavität eingespritzt wird, und abschließend das Material der Dekorschicht (3) in die Formkavität eingespritzt wird, wobei die Temperatur der der Sichtseite (4) des Kunststoffformteils (1) zugewandten Wandung der Kavität der Spritzgießform bereits zu Beginn des Einspritzvorgangs für die Dekorschicht (3) höher ist, als die Glasübergangstemperatur des für die Dekorschicht (3) verarbeiteten Kunststoffes.

13. Verfahren nach Anspruch 12, **dadurch gekennzeichnet, dass** die der Sichtseite des Kunststoffformteils (1) zugewandte Wandung der Kavität der Spritzgießform während der Dauer des Einspritzvorganges der Dekorschicht (3) auf einer Temperatur oberhalb der Glasübergangstemperatur des verarbeiteten Kunststoffes gehalten wird.

14. Verfahren nach einem der Ansprüche 12 oder 13, bei dem das Material der Dekorschicht (3) ein teilkristalliner thermoplastischer Kunststoff ist und die Glasübergangstemperatur ersetzt ist durch eine Vergleichstemperatur, die der um 15K verringerten Erweichungstemperatur entspricht.

15. Verfahren nach Anspruch 16, **dadurch gekennzeichnet**, bei dem das Material der Dekorschicht (3) ein modifiziertes oder nichtmodifiziertes POM ist.
